# EUROPEAN PATENT SPECIFICATION

(11) **EP 4 030 156 B1**
(45) Date of publication and mention of the grant of the patent: **04.01.2023**
(21) Application number: 20894943.8
(22) Date of filing: 06.11.2020
(51) Int. Cl.: G01K 1/14, G01K 7/22, G01K 1/08

(54) **TEMPERATURE SENSOR**
TEMPERATURSENSOR
CAPTEUR DE TEMPÉRATURE

(43) Date of publication of application: 20.07.2022
(73) Proprietor: Shibaura Electronics Co., Ltd., Saitama-shi, Saitama 338-0001 (JP)
(72) Inventor: YOSHIHARA, Takamasa, Saitama-shi, Saitama 338-0001 (JP); KIRIHARA, Masanori, Saitama-shi, Saitama 338-0001 (JP)
(74) Representative: Henkel & Partner mbB
(86) International application number: PCT/JP2020/041525
(87) International publication number: WO 2022/097272

(56) References cited:
- CN-A- 111 615 622
- GB-A- 2 167 603
- JP-A- S60 334
- JP-A- H08 219 904
- JP-A- 2010 151 805
- JP-A- 2018 077 095
- JP-A- 2018 179 875
- JP-U- S5 368 283
- JP-U- S62 167 132

## Description

### Technical Field

The present invention relates to a connection form for electrical wires in a temperature sensor.

### Background Art

As a temperature sensor, for example, there is known a temperature sensor including a heat-sensitive body, extraction wires as first electrical wires, and lead wires as second electrical wires. The heat-sensitive body is constituted by a thermistor. The extraction wires are connected with the heat-sensitive body. The lead wires are connected with the extraction wires. In some cases, the heat-sensitive body is covered with an electrically insulating body composed of glass, for example. As a connection technique for the first electrical wires and the second electrical wires, crimping in which a crimping tool is used is known as disclosed in JP 2019- 12083 A.

CN 111 615 622 A or EP 3 842 775 A1 disclose a temperature sensor including a first covering layer covering a heat-sensitive body, a pair of electrical wires electrically connected with the heat-sensitive body, the electrical wires comprising a pair of extraction wires each electrically connected with the heat-sensitive body and a part of a pair of lead wires each connected with a respective one of the extraction wires. The first covering layer and a part of the periphery of the lead wires are encased by a second and a third covering layer of a filling body. Further, a protective tube made of metal surrounds the covering layer without being in contact with the lead wires.

GB 2 167 603 A discloses a temperature probe or sensor which comprises an elongated outer case containing a temperature sensitive resistance coil on a ceramic core. A heat conductive compound forms a bedding material for the coil and core. The end of a case is sealed by an epoxy resin and a sealing sleeve is heat shrunk onto the end of the case and on the cable cover of lead wires leading to the coil terminals.

### Summary of Invention

### Technical Problem

As described above, crimping is well known as means for the connection and fixation of the electrical wires of the temperature sensor. However, there is a concern that the connection by crimping may impart mechanical damage to the electrical wires through the crimping tool that is used for the crimping. The connection between conducting wires could be worse, but particularly, in the case where a member including an insulating covering is fixed to another member, for example, to a member supporting the heat-sensitive body, by crimping, there is a concern of a damage to the insulting covering. Further, the man-hours for the crimping raises the cost of the temperature sensor.

Hence, the present invention has an object to provide a temperature sensor including a connection part that makes it possible to restrain the mechanical damage to the electrical wire, particularly, to the insulating covering, with little man-hours.

### Solution to Problem

A temperature sensor in the present invention includes the features of claim 1 comprising inter alia a heat-sensitive body, a pair of electrical wires electrically connected with the heat-sensitive body, and a protective body covering the heat-sensitive body and a part of the pair of electrical wires.

The temperature sensor in the present invention includes a holding body for a sensor element, and a fixing pipe covering a periphery of the pair of electrical wires and the holding body and being a member made of a material having elastic property or a member having a property of contracting when being heated.

Preferably, the holding body in the present invention has a retaining structure for an axis line direction of the fixing pipe.

The holding body in the present invention includes a base part supporting the pair of electrical wires such that the pair of electrical wires is arrayed, and the retaining structure preferably includes a projection formed on one or both of edges on both sides of the base part in a width direction in which the pair of electrical wires is arrayed.

The holding body in the present invention includes a holding part pressing and fixing the protective body.

The fixing pipe in the present invention presses the pair of electrical wires drawn from the protective body, against the base part.

### Advantageous Effects of Invention

As described above, according to the temperature sensor in the present invention, the fixing pipe capable of expanding and contracting can fix the pair of electrical wires and the holding body while covering the periphery of the pair of electrical wires and the holding body. The fixing pipe capable of expanding and contracting can be inserted to a predetermined position, without using special devices, and therefore, can be attached with little man-hours. Further, since the fixing pipe is capable of expanding and contracting, there is a low possibility that the fixing pipe imparts mechanical damage to the electrical wire, particularly, to the insulating covering.

### Brief Description of Drawings

FIG. 1A and FIG. 1B each show a temperature sensor according to an embodiment of the present invention, FIG. 1A showing the temperature sensor before a fixing pipe is provided, FIG. 1B showing the temperature sensor after the fixing pipe is provided;
FIG. 2A, FIG. 2B and FIG. 2C each show the temperature sensor according to the embodiment, FIG. 2A being a front view, FIG. 2B being a plan view, FIG. 2C being a bottom view;
FIG. 3A and FIG. 3B each show the temperature sensor according to the embodiment, FIG. 3A being a left-side view, FIG. 3B being a right-side view;
FIG. 4 is a plan view showing a sensor element according to the embodiment;
FIG. 5A and FIG. 5B each show the temperature sensor according to the embodiment, FIG. 5A being a cross-sectional view of the fixing pipe, FIG. 5B being a diagram showing a force action state in a state where the fixing pipe is attached;
FIG. 6A and FIG. 6B each show the temperature sensor according to the embodiment, FIG. 6A showing a state before the fixing pipe is provided, FIG. 6B showing a state after the fixing pipe is provided; and
FIG. 7A, FIG. 7B, FIG. 7C, FIG. 7D, FIG. 7E, FIG. 7F and FIG. 7G are diagrams showing a plurality of examples of a retaining structure of the temperature sensor according to the embodiment.

### Description of Embodiments

A temperature sensor 1 according to an embodiment of the present invention will be described below with reference to the drawings.

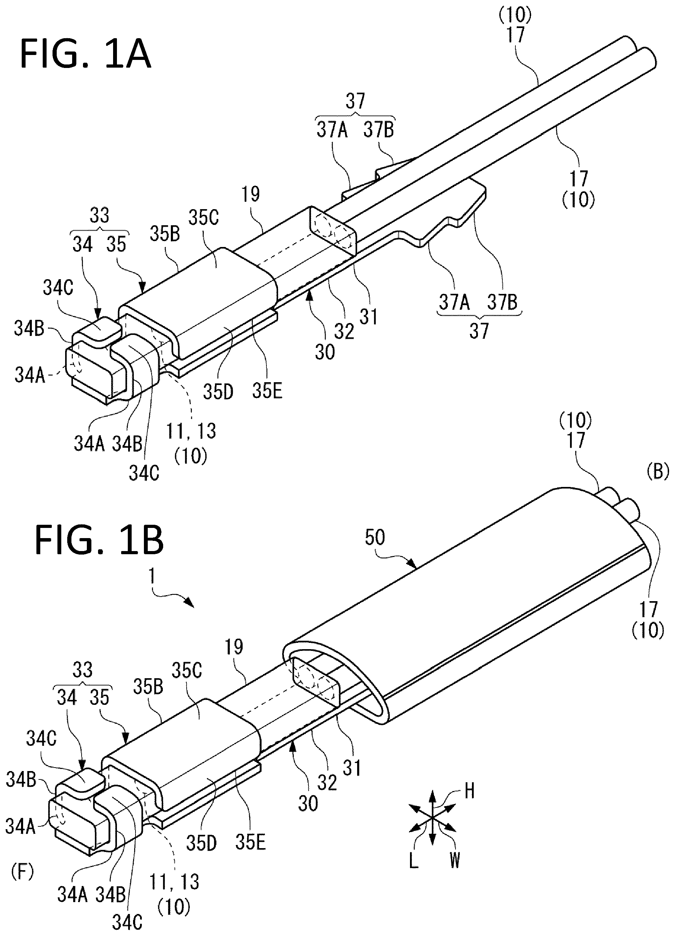

As shown in FIG. 1A and FIG. 1B, the temperature sensor 1 includes a sensor element 10, a holding body 30, and a fixing pipe 50. A pair of lead wires 17, 17 is drawn from the sensor element 10. The holding body 30 holds the sensor element 10. The fixing pipe 50 covers the periphery of the lead wires 17, 17 and the holding body 30, and is capable of expanding and contracting, at least in a radial direction in a cross-section. Since the fixing pipe 50 is composed of a material capable of expanding and contracting in the temperature sensor 1, the lead wires 17, 17 can be fixed to the holding body 30 while restraining a mechanical damage to insulating covering 17B, 17B of the lead wires 17, 17, with little man-hours.

Hereinafter, constituent elements of the temperature sensor 1 will be described, and thereafter, effects of the temperature sensor 1 will be described.

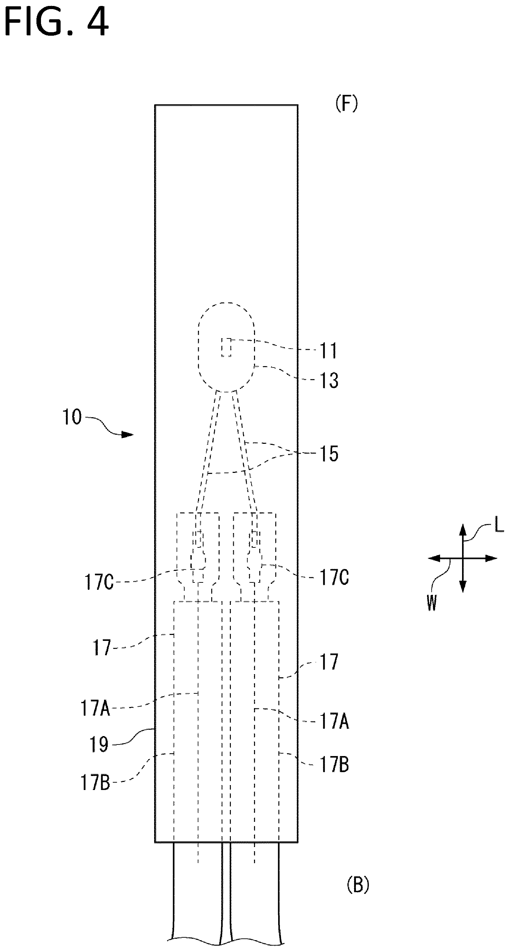

### [Sensor Element 10: FIG. 1A, FIG. 1B and FIG. 4]

As shown in FIG. 1A, FIG. 1B and FIG. 4, the sensor element 10 includes a heat-sensitive body 11, a protective layer 13, a pair of extraction wires 15, 15, and the lead wires 17, 17. The protective layer 13 is made of glass and covers the periphery of the heat-sensitive body 11. Each of the extraction wires 15, 15 is electrically connected with the heat-sensitive body 11. Each of the lead wires 17, 17 is connected with each of the extraction wires 15, 15. The extraction wires 15, 15 and the lead wires 17, 17 constitute the pair of electrical wires in the present invention. Further, the sensor element 10 includes a protective body 19 that covers the heat-sensitive body 11, the protective layer 13, the extraction wires 15, 15 and front end parts of the lead wires 17, 17. In the temperature sensor 1, as shown in FIG. 1A, FIG. 1B and FIG. 4, a front (F) is defined as a side on which the heat-sensitive body 11 is provided, and a rear (B) is defined as the opposite side. However, the definitions are relative definitions. Further, in the temperature sensor 1, a longitudinal direction (L), a width direction (W) and a height direction (H) are defined as shown in FIG. 1A, FIG. 1B and FIG. 4. The definitions are used for convenience of the description of the embodiment, and do not limit the present invention.

### [Heat-Sensitive Body 11]

As the heat-sensitive body 11, for example, a thermistor is applied. The thermistor is an abbreviated name of thermally sensitive resistor, and is a metal oxide that measures the temperature using the change in electrical resistance depending on the temperature.

The thermistor is categorized in an NTC (negative temperature coefficient) and a PTC (positive temperature coefficient), and both thermistors can be used as the heat-sensitive body 11.

As the heat-sensitive body 11, it is possible to use a sintered oxide body whose basic composition is a manganese oxide (Mn₃O₄) having a spinel structure, which is a typical structure of the NTC thermistor. As the heat-sensitive body 11, it is possible to use a sintered oxide body having a composition of M_{X}Mn_{3-X}O₄ resulting from adding M element (one or two or more of Ni, Co, Fe, Cu, Al and Cr) to the basic composition. Furthermore, it is possible to add one or two or more of V, B, Ba, Bi, Ca, La, Sb, Sr, Ti and Zr.

Further, as the heat-sensitive body 11, it is possible to use a sintered oxide body whose basic composition is a composite oxide having a perovskite structure, which is a typical structure of the PTC thermistor, for example, YCrO₃.

### [Protective Layer 13]

The protective layer 13 made of glass restrains the chemical change and physical change of the heat-sensitive body 11 due to the environment condition and mechanically protects the heat-sensitive body 11, by sealing the heat-sensitive body 11 and keeping the airtight state. The protective layer 13 made of glass covers a front end of each of the extraction wires 15, 15 in addition to the whole of the heat-sensitive body 11, and seals each of the extraction wires 15, 15.

The provision of the protective layer 13 made of glass is just a preferable example in the embodiment, and the provision of the protective layer 13 is optional.

### [Extraction Wires 15, 15]

The extraction wires 15, 15 are electrically connected with a pair of unillustrated electrodes of the heat-sensitive body 11, respectively.

Since each of the extraction wires 15, 15 is sealed by the protective layer 13, it is preferable to use a Dumet wire having a linear expansion coefficient close to that of the glass composing the protective layer 13. The Dumet wire is a conducting wire in which an alloy containing iron and nickel as main components is used as a conductor (core wire) and in which the alloy is coated with copper.

### [Lead Wires 17, 17]

As shown in FIG. 4, each of the lead wires 17 includes a core wire 17A and an insulating covering 17B. The core wires 17A, 17B are constituted by conductors. Each of the insulating coverings 17B, 17B covers each of the peripheries of the core wires 17A, 17A. On one end side of the lead wires 17, 17, the core wires 17A, 17A are exposed out of the insulating coverings 17B, 17B, in a predetermined range. Each of the exposed parts of the core wires 17A, 17A is electrically connected with each of the extraction wires 15, 15.

In the embodiment, each of end parts of the extraction wires 15, 15, by welding or the like, is joined to each of pads 17C, 17C connected with the core wires 17A, 17A, respectively, and thereby, the extraction wires 15, 15 and the core wires 17A, 17A are electrically connected. The other ends of the lead wires 17, 17 are connected with an unillustrated circuit board through other electrical wires, as necessary.

### [Protective Body 19]

As shown in FIG. 4, the protective body 19 covers the sensor element 10, over a range containing the heat-sensitive body 11, the protective layer 13, the extraction wires 15, 15 drawn from the heat-sensitive body 11 and partial sections of the lead wires 17, 17 connected with the extraction wires 15, 15.

The protective body 19 protects the heat-sensitive body 11, the extraction wires 15, 15 and the core wires 17A, 17A of the lead wires 17, 17, from external force such as impact.

For example, it is preferable that the protective body 19 be formed of a fluorine-based resin such as polytetrafluoroethylene (PTFE) and a tetrafluoroethylene-perfluoroalkylvinylether copolymer (PFA). Other than the resin materials, the protective body 19 can be composed of an appropriate resin material, regardless of whether the resin is a thermoplastic resin or a thermoset resin.

In the case where the protective body 19 is composed of a transparent resin, the appearance inspection of the sensor element 10 can be performed by visual observation through the protective body 19.

The protective body 19 has a rectangular parallelepiped shape extending in the longitudinal direction (L), as a preferable example of the appearance shape, but may have another appearance shape such as a cylindrical shape.

For example, the protective body 19 can be produced by performing injection molding while the sensor element 10 is disposed in a mold.

[Holding Body 30: FIG. 1A, FIG. 1B, FIG. 2A, FIG. 2B, FIG. 2C, FIG. 3A and FIG. 3B]

Next, the holding body 30 will be described with reference to FIG. 1A, FIG. 1B, FIG. 2A, FIG. 2B, FIG. 2C, FIG. 3A and FIG. 3B.

The holding body 30, on which the sensor element 10 is placed, is constituted by a single member composed of a metal material, preferably.

The metal material to be used for the holding body 30 has a much higher heat conductivity than other materials such as resins. Therefore, when the temperature sensor 1 is disposed such that the holding body 30 contacts with a temperature measurement object, the change in the temperature of the temperature measurement object is quickly transferred to the heat-sensitive body 11 covered with the holding body 30. For obtaining the quick heat transfer, for example, it is preferable to select stainless steel, which is an iron alloy, or phosphor bronze, as the metal material composing the holding body 30. In the case where the function of the heat transfer is not necessary, the holding body 30 may be composed of another material such as a resin material having a necessary stiffness.

The holding body 30 includes a base part 31, a holding part 33 and a retaining structure 37. The base part 31 has a flat shape that is rectangular in planar view. The holding part 33 is provided on the front (F) side of the base part 31. The retaining structure 37 is provided on the rear (B) side of the base part 31. In the holding body 30, the holding part 33 can be formed by making a wholly flat stamping material having a shape of the spread holding part 33 and constituted by, for example, a stainless steel plate, disposing the protective body 19 at a predetermined position, and thereafter, crimping the protective body 19 by bending processing. The pair of lead wires 17, 17 is supported by the base part 31, so as to be arrayed in the width direction (W).

### [Holding Part 33 (First Holding Part 34, Second Holding Part 35): FIG. 1A, FIG. 1B, FIG. 2A, FIG. 2B, FIG. 2C, FIG. 3A and FIG. 3B]

As shown in FIG. 1A, FIG. 1B, FIG. 2A, FIG. 2B, FIG. 2C, FIG. 3A and FIG. 3B, the holding part 33 includes a first holding part 34 and a second holding part 35. The first holding part 34 fixes the protective body 19 on the front (F) side of the protective body 19. The second holding part 35 fixes the protective body 19 on the rear (B) side with respect to the first holding part 34. The first holding part 34 and the second holding part 35 have the same function, in that the first holding part 34 and the second holding part 35 fix the protective body 19 to the base part 31 by holding the protective body 19, but there is a difference as follows. That is, the main purpose of the first holding part 34 is to hold and fix the protective body 19 by crimping. On the other hand, the main purpose of the second holding part 35 is to release the heat transferred from the base part 31 through the protective body 19, toward the heat-sensitive body 11, by contacting with the protective body 19 in a wider area than the first holding part 34. Accordingly, the force of the second holding part 25 for holding the protective body 19 may be weaker than that of the first holding part 34.

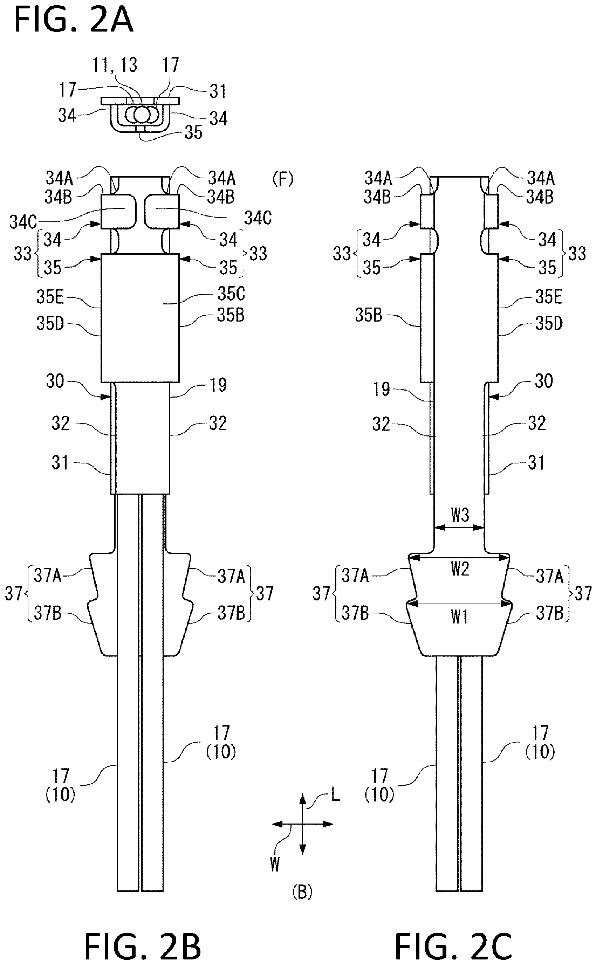

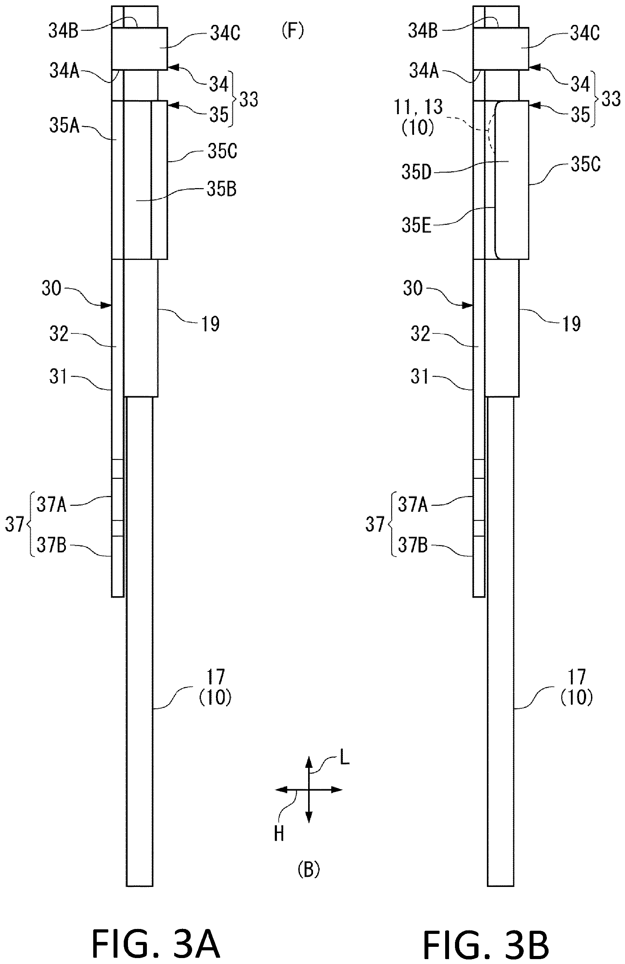

As shown in FIG. 2A, FIG. 2B, FIG. 2C, FIG. 3A and FIG. 3B, the first holding part 34 includes connection ends 34A, 34A, lateral plates 34B, 34B and flat plates 34C, 34C. The connection ends 34A, 34A communicate with both edges 32, 32 of the base part 31 in the width direction (W). The lateral plates 34B, 34B communicate with the connection ends 34A, 34A, and stands up from the connection ends 34A, 34A in the height direction (H). The flat plates 34C, 34C communicate with the lateral plates 34B, 34B, and are parallel to the base part 31.

The first holding part 34 holds the protective body 19 while pressing the protective body 19 in the width direction (W) by the pair of lateral plates 34B, 34B provided with a gap in the width direction (W). Further, the first holding part 34 presses the protective body 19 in the height direction (H) by the base part 31 and flat plates 34C, 34C provided with a gap in the height direction (H). By the press in the width direction (W) and the press in the height direction (H), the protective body 19 is fixed by crimping of the first holding part 34.

Next, as shown in FIG. 2A, FIG. 2B, FIG. 2C, FIG. 3A and FIG. 3B, the second holding part 35 includes a connection end 35A, a first lateral plate 35B, a flat plate 35C and a second lateral plate 35D. The connection end 35A communicates with one edge 32 of the base part 31 in the width direction (W). The first lateral plate 35B communicates with the connection end 35A, and stands up from the connection end 35A in the height direction (H). The flat plate 35C communicates with the first lateral plate 35B, and is parallel to the base part 31. The second lateral plate 35D communicates with the flat plate 35C, and is parallel to the first lateral plate 35B. At a distal end 35E of the second lateral plate 35D, a short clearance from the base part 31 is provided.

In the second holding part 35, the first lateral plate 35B, the flat plate 35C and the second lateral plate 35D, in addition to the base part 31, surround the periphery of the protective body 19 such that the surfaces contact with the protective body 19. The heat-sensitive body 11 is provided in the interior of the protective body 19 surrounded by the second holding part 35. Moreover, the second holding part 35 including the first lateral plate 35B, the flat plate 35C and the second lateral plate 35D is set such that the size of the second holding part 35 in the longitudinal direction (L) is larger than that of the first holding part 34, and thereby, it is possible to sufficiently exert the function of the heat transfer from the second holding part 35 to the heat-sensitive body 11.

### [Retaining Structure 37: FIG. 1A, FIG. 1B, FIG. 2A, FIG. 2B, FIG. 2C, FIG. 3A and FIG. 3B]

Next, the retaining structure 37 will be described with reference to FIG. 1A, FIG. 1B, FIG. 2A, FIG. 2B, FIG. 2C, FIG. 3A and FIG. 3B.

The retaining structure 37 is formed on the rear (B) side of the base part 31, integrally with the base part 31. As shown in FIG. 1A and FIG. 1B, the fixing pipe 50 is attached to the holding body 30, so as to enclose the base part 31, the retaining structure 37 and the lead wires 17, 17. Thereby, the lead wires 17, 17 are sandwiched in the height direction (H) by the base part 31 and the fixing pipe 50, so that the lead wires 17, 17 are fixed to the base part 31. On this occasion, the retaining structure 37 restrains the fixing pipe 50 from falling off from the base part 31, and generates the tensile force to the inside in the fixing pipe 50.

As shown in FIG. 2A, FIG. 2B, FIG. 2C, FIG. 3A and FIG. 3B, the retaining structure 37 includes first projections 37A, 37A and second projections 37B, 37B. The first projections 37A, 37A and the second projections 37B, 37B each project from both edges 32, 32 of the base part 31 in the width direction (W) to the outsides in the width direction (W). The distance between the respective distal ends of the first projection 37A and the first projection 37A in the width direction (W) is referred to as W2, and the distance between the respective distal ends of the second projection 37B and the second projection 37B in the width direction (W) is referred to as W1. The distances W1, W2 are larger than the size W3 of the base part 31 in the width direction (W). This is intended to generate the tensile force in the fixing pipe 50 when the fixing pipe 50 is attached, which will be described later in detail. Between the first projections 37A and the second projections 37B, the first projections 37A and the second projections 37B are depressed from the distal ends toward the center in the width direction (W). The size between the depressions is set so as to be larger than the size W3.

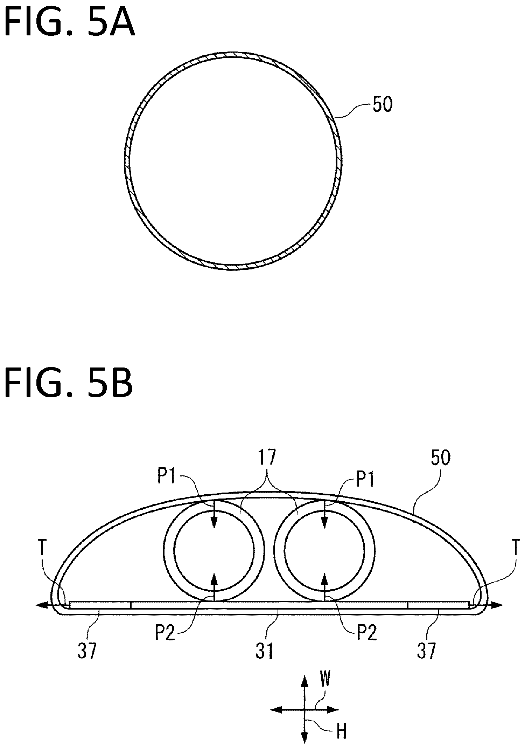

### [Fixing Pipe 50: FIG. 1B, FIG. 5A and FIG. 5B]

Next, the fixing pipe 50 will be described with reference to FIG. 1B, FIG. 5A and FIG. 5B.

As an example, the fixing pipe 50 is composed of glass wool and is formed in a pipe shape. The glass wool is a flocculent material composed of glass fiber. As well known, the glass wool is used as a heat insulating material for buildings, a heat insulating material for pipes of air conditioning ducts, and the like.

The glass wool has elastic property in addition to heat insulating property, and the fixing pipe 50 can fix the lead wires 17, 17 to the base part 31 by using the elastic property in addition to the heat insulating property.

As shown in FIG. 5A, in the initial state before the fixing pipe 50 is attached to the sensor element 10, the cross-section shape of the fixing pipe 50 is a perfect circle, as an example.

The glass wool and the perfect circle are just examples, and the material and opening shape of the fixing pipe 50 are not limited as long as a predetermined fixation function described next is exerted.

As shown in FIG. 1B, the fixing pipe 50 is attached so as to enclose the retaining structure 37 and lead wires 17, 17 formed on the rear (B) side of the base part 31 of the sensor element 10. Thereby, the fixing pipe 50 restricts the movement of the lead wires 17, 17 relative to the base part 31. The length of the fixing pipe 50 is not limited to the length in the embodiment, as long as the length allows the retaining structure 37 to be contained. For example, the length may be such a length that the end part of the fixing pipe 50 on the front (F) side is positioned above the end part of the protective body 19 on the rear (B) side.

When the fixing pipe 50 is attached so as to contain the retaining structure 37 and the lead wires 17, 17, the fixing pipe 50 is extended in the width direction (W) and is squashed in the height direction (H), as shown in FIG. 5B. Thus, a pressing force P1 is applied from the fixing pipe 50 to each of the lead wires 17, 17 downward in the figure. The pressing force P1 is generated by a tensile force T generated when the attached fixing pipe 50 is pushed outward in the width direction (W) by the retaining structure 37. At the same time, each of the lead wires 17, 17 receives a pressing force P2 from the base part 31 upward in the figure. By generating the pressing forces P1, P2, the fixing pipe 50 can exert the function to fix the lead wires 17, 17 to the base part 31.

The tensile force T is generated by the contact of the fixing pipe 50 with the retaining structure 37. Therefore, the first projections 37A, 37A and second projections 37B, 37B of the retaining structure 37 need to project to the outsides of the lead wires 17, 17 in the width direction (W).

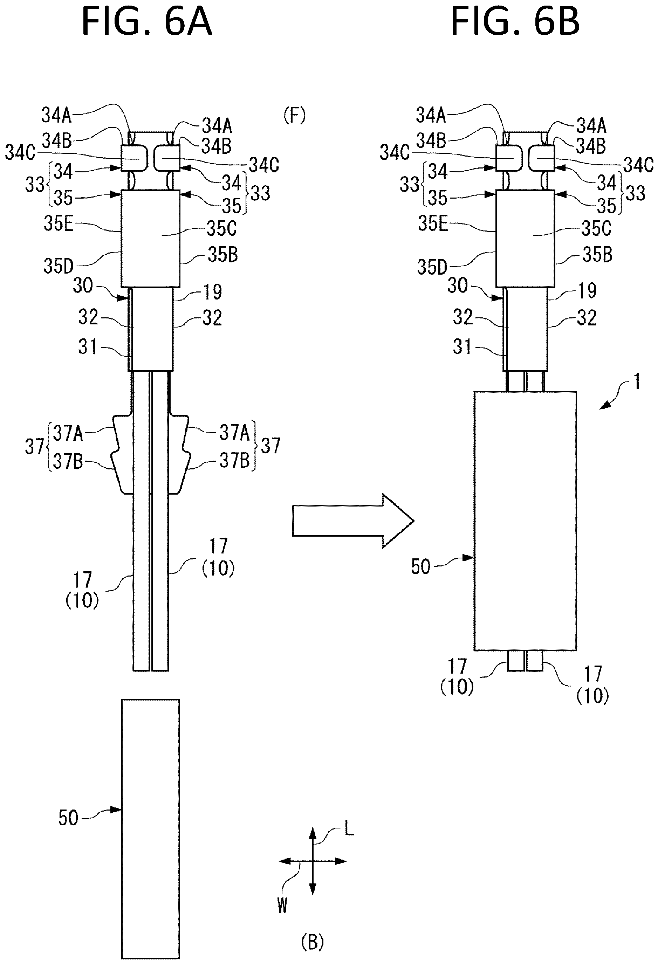

### [Attachment Procedure for Fixing Pipe 50: FIG. 6A and FIG. 6B]

A procedure for attaching the fixing pipe 50 to the sensor element 10 will be described with reference to FIG. 6A and FIG. 6B.

First, as shown in FIG. 6A, the sensor element 10 is inserted into the fixing pipe 50 from the other end side of the lead wires 17, 17.

Next, the fixing pipe 50 is moved to the one end side of the lead wires 17, 17, and the fixing pipe 50 is pushed to a position allowing the retaining structure 37 to be covered. At the time of the pushing, the pressing forces P1, P2 and the tensile force T are generated in the fixing pipe 50 as shown in FIG. 5A and FIG. 5B, and therefore, a reasonable force is necessary for the work of the pushing of the fixing pipe 50. Further, for the pushing, the fixing pipe 50 may be moved while the position of the sensor element 10 is fixed, or the sensor element 10 may be moved while the fixing pipe 50 is fixed.

By moving the fixing pipe 50 to a predetermined attachment position, the temperature sensor 1 according to the embodiment is obtained.

### [Effect]

Next, effects of the temperature sensor 1 according to the embodiment will be described.

### [Basic Effect]

In the temperature sensor 1, the fixing pipe 50 is attached, and thereby, the lead wires 17, 17 are fixed to the base part 31 of the sensor element 10. An example in which the fixing pipe 50 is composed of a material capable of expanding and contracting is shown. As means for fixing the lead wires 17, 17 to the base part 31, for example, crimping can be employed. However, the crimping work requires cost, and there is a concern that the crimping may impart serious damage to the lead wires 17, 17.

In contrast, by using the fixing pipe 50 according to the embodiment, it is possible to restrain the damage that is imparted when the lead wires 17, 17 are fixed to the base part 31 of the sensor element 10, and in addition, it is possible to reduce the man-hours for the work because special devices for the attachment are unnecessary. That is, according to the embodiment, it is possible to obtain, at low cost, the temperature sensor 1 that assures the soundness of the lead wires 17, 17 whose movement is restricted.

### [Effect of Retaining Structure 37]

The temperature sensor 1 includes the retaining structure 37. Accordingly, even when the temperature sensor 1 is used under a vibration environment, it is possible to restrain the fixing pipe 50 from falling off from the predetermined attachment position, and therefore, it is possible to stably fix the lead wires 17, 17 to the base part 31. Particularly, in the above-described embodiment, the retaining structure 37 is provided at the edges 32 of both side of the base part 31 in the width direction (W), and therefore, the effect of the retaining in the width direction (W) is obtained. Furthermore, as the retaining structure 37, the first projections 37A, 37A and the second projections 37B, 37B are provided at both of the respective edges 32, 32, and therefore, the effect of the retaining in the longitudinal direction (L) is high.

Further, on the base part 31, the first projections 37A, 37A and second projections 37B, 37B constituting the retaining structure 37 project to the outsides of the lead wires 17, 17 in the width direction (W). Therefore, the pressing forces P1, P2 are generated from the fixing pipe 50 to the lead wires 17, 17. The pressing forces P1, P2 assure the contact of the fixing pipe 50 with the retaining structure 37, and therefore, it is possible to more reliably fix the lead wires 17, 17 to the base part 31.

### [Holding Part 33 and Fixing Pipe 50]

In the temperature sensor 1, on the front (F) side, the holding part 33 fixes the protective body 19 of the sensor element 10, and on the rear (B) side, the fixing pipe 50 fixes the lead wires 17, 17 of the sensor element 10 together with the base part 31. Accordingly, the temperature sensor 1 is fixed over a wide range of the sensor element 10 in the longitudinal direction (L), and therefore, even when the temperature sensor 1 is placed under a vibration environment, the vibration of the sensor element 10 is restrained due to the fixation by the holding part 33 and the fixing pipe 50.

The preferred embodiment of the present invention has been described above.

### [Configuration of Retaining Structure 37]

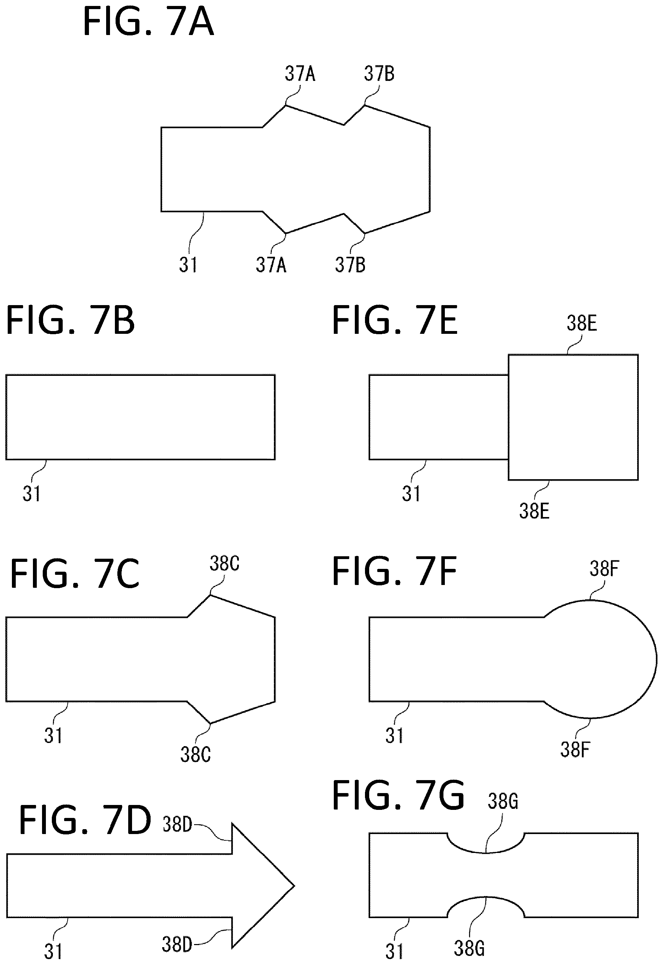

In the present invention, forms shown in FIGS 7C to 7G can be employed as the retaining structure.

FIG. 7C exemplifies a case where only a pair of projections 38C, 38C is provided in the longitudinal direction (L). Even in this form, the fixing pipe 50 is caught by the projections 38C, 38C on both sides in the width direction (W), and thereby, the predetermined retaining effect is exerted.

FIG. 7D exemplifies a case where projections 38D, 38D having a triangle shape in planar view are provided. Even in this form, the fixing pipe 50 is caught by the projections 38D, 38D on both sides in the width direction (W), and thereby, the predetermined retaining effect is exerted.

FIG. 7E exemplifies a case where projections 38E, 38E having a rectangular shape in planar view are provided. Even in this form, the fixing pipe 50 is caught by the projections 38E, 38E on both sides in the width direction (W), and thereby, the predetermined retaining effect is exerted.

FIG. 7F exemplifies a case where projections 38F, 38F having a circular arc shape in planar view are provided. Even in this form, the fixing pipe 50 is caught by the projections 38F, 38F on both sides in the width direction (W), and thereby, the predetermined retaining effect is exerted.

In FIG. 7G, parts of the edges 32, 32 on both sides of the base part 31 include depressions 38E, 38E toward the center in the width direction (W). In this form, the fixing pipe 50 enters the depressions 38E, 38E, and the retaining of the fixing pipe 50 is realized.

Furthermore, in the example described above, the retaining structure is provided at the edge 32 of the base part 31, but the retaining structure may be provided at an arbitrary position as long as the function is exerted. For example, a projection protruding in the height direction (H) may be provided on the back surface of the base part 31. The retaining structure extends the fixing pipe 50 in the height direction (H), and thereby, presses the lead wires 17, 17 against the base part 31.

In the embodiment, an example in which the retaining structure 37 is included has been described as a preferred form. However, the temperature sensor 1 in the present invention may be configured not to include the retaining structure 37, as long as the retaining can be realized. For example, when the fixing pipe 50 is composed of a material having a high static friction coefficient or a material having a high elasticity, it is possible to restrain the fixing pipe 50 from falling off without providing the retaining structure 37.

### [Form of Fixing Pipe 50]

In the fixing pipe 50 in the example described above, the opening shape is a perfect circle shape, but an arbitrary shape may be adopted as described above. For example, the opening shape may be another shape such as an elliptic shape, a triangular shape and a rectangular shape. However, the fixing pipe 50 needs to be deformable such that the necessary pressing forces P1, P2 are obtained when the fixing pipe 50 is attached to the sensor element 10.

In the fixing pipe 50, the opening diameter may be constant in the axis line direction (the longitudinal direction (L)), or a part having a different opening diameter may be included. For example, the fixing pipe 50 may include a part having a smaller opening diameter and corresponding to the depressions 38E, 38E in FIG. 7G.

Next, the fixing pipe 50 described above is composed of glass wool, as an example, but the present invention is not limited to this. For example, a member in which metal mesh is formed in a pipe shape, a member in which silicone mesh is formed in a pipe shape, or the like can be used as the fixing pipe 50. Further, a member having a property of contracting when being heated, for example, a member such as silicone rubber having thermal contractility may be used as the fixing pipe 50.

Furthermore, the fixing pipe 50 has a pipe shape before the fixing pipe 50 is attached to the sensor element 10, but the present invention is not limited to this. For example, the fixing pipe 50 may be configured by preparing a fixing pipe material having a planar shape and composed of glass wool or the like, winding this material in a pipe shape around a necessary attachment position, and then performing bonding or the like. It is also necessary to wind the material in a pipe shape such that the fixing pipe 50 can press the lead wires 17, 17 against the base part 31.

### [Sensor Element 10]

Next, the sensor element 10 described above is an example, and a sensor element having a different form can be used in the temperature sensor in the present invention. For example, the cross-section shape of the protective body 19 of the sensor element 10 is a rectangular shape, but a protective body whose cross-section shape is a circular shape can be used in the present invention.

### [Holding Body 30]

Next, the holding body 30 described above is an example, and a function other than the function to hold the sensor element 10 can be added to the holding body in the present invention. For example, it is possible to have a function as a lug terminal for fixing the temperature sensor 1 to the temperature measurement object by screwing.

### Reference Signs List

- 1: temperature sensor
- 10: sensor element
- 11: heat-sensitive body
- 13: protective layer
- 15: extraction wire
- 17: lead wire
- 17A: core wire
- 17B: insulting covering
- 19: protective body
- 30: holding body
- 31: base part
- 32: edge
- 33: holding part
- 34: first holding part
- 34A: connection end
- 34B: lateral plate
- 34C: flat plate
- 35: second holding part
- 35A: connection end
- 35B: first lateral plate
- 35C: flat plate
- 35D: second lateral plate
- 35E: distal end
- 37: retaining structure
- 37A: first projection
- 37B: second projection
- 38B, 38C, 38D, 38F: projection
- 38E: depression
- 50: fixing pipe

## Claims

1. A temperature sensor (1) comprising:
a sensor element (10) including a heat-sensitive body (11), a pair of electrical wires electrically connected with the heat-sensitive body (11), the electrical wires comprising a pair of extraction wires (15) each electrically connected with the heat-sensitive body (11) and a pair of lead wires (17) each connected with a respective one of the extraction wires (15), and a protective body (19) covering the heat-sensitive body (11), the extraction wires (15) and a part of the pair of lead wires (17);
a holding body (30) for the sensor element (10), the holding body (30) including a holding part (33) pressing and fixing the protective body (19), and a base part (31) supporting the pair of lead wires (17) such that the pair of lead wires (17) is arrayed; and
a fixing pipe (50) that is a member made of a material having elastic property or a member having a property of contracting when being heated and covers a periphery of the pair of lead wires (17) and the holding body (30) so as to apply a pressing force (P1) to each of the lead wires (17) against the base part (31) to restrict the movement of the lead wires (17) relative to the base part (31).

2. The temperature sensor (1) according to claim 1, wherein
the holding body (30) has a retaining structure (37) for an axis line direction of the fixing pipe (50).

3. The temperature sensor (1) according to claim 2, wherein
the retaining structure (37) includes a projection (37A,37B;38C;38E;38F;38D) or a depression (38G) formed on one or both of edges (32) on both sides of the base part (31) in a width direction (W) in which the pair of lead wires (17) is arrayed.

4. The temperature sensor (1) according to claim 2 or 3, wherein
the fixing pipe (50) is made of the material such that the fixing pipe (50), when attached to contain the retaining structure (37) and the lead wires (17), is extended in the width direction (W) by the retaining structure (37) and is squashed in a height direction (H) to thereby apply the pressing force (P1) to the lead wires (17).

5. The temperature sensor (1) according to claim 4, wherein
the fixing pipe (50) is composed of glass wool or a metal mesh or a silicone mesh, respectively formed into a pipe shape.

6. The temperature sensor (1) according to any one of claims 1 to 5, wherein
the holding body (30) is constituted by a single member composed of a metal material.

## Patentansprüche

1. Ein Temperatursensor (1) umfassend:
ein Sensorelement (10) mit einem wärmeempfindlichen Körper (11), einem Paar elektrischer Drähte, die elektrisch mit dem wärmeempfindlichen Körper (11) verbunden sind, wobei die elektrischen Drähte ein Paar Extraktionsdrähte (15), die jeweils elektrisch mit dem wärmeempfindlichen Körper (11) verbunden sind, und ein Paar Leitungsdrähte (17) umfassen, die jeweils mit einem der Extraktionsdrähte (15) verbunden sind, und einem Schutzkörper (19), der den wärmeempfindlichen Körper (11), die Extraktionsdrähte (15) und einen Teil des Paares von Leitungsdrähten (17) abdeckt,
einen Haltekörper (30) für das Sensorelement (10), wobei der Haltekörper (30) ein Halteteil (33), das den Schutzkörper (19) drückt und fixiert, und ein Basisteil (31), das das Paar von Leitungsdrähten (17) trägt, so dass das Paar von Leitungsdrähten (17) angeordnet ist, umfasst, und
ein Befestigungsrohr (50), das ein Element aus einem Material mit elastischen Eigenschaften oder ein Element mit der Eigenschaft, sich bei Erwärmung zusammenzuziehen, ist und das einen Umfang des Paares von Leitungsdrähten (17) und des Haltekörpers (30) abdeckt, um eine Druckkraft (P1) auf jeden der Leitungsdrähte (17) gegen den Basisteil (31) auszuüben, um die Bewegung der Leitungsdrähte (17) relativ zu dem Basisteil (31) zu begrenzen.

2. Der Temperatursensor (1) nach Anspruch 1, wobei
der Haltekörper (30) eine Haltestruktur (37) für eine Achslinienrichtung des Befestigungsrohrs (50) aufweist.

3. Der Temperatursensor (1) nach Anspruch 2, wobei
die Haltestruktur (37) einen Vorsprung (37A,37B;38C;38E;38F;38D) oder eine Vertiefung (38G) aufweist, der/die an einer oder beiden Kanten (32) auf beiden Seiten des Basisteils (31) in einer Breitenrichtung (W) ausgebildet ist, in der das Paar von Leitungsdrähten (17) angeordnet ist.

4. Der Temperatursensor (1) nach Anspruch 2 oder 3, wobei
das Befestigungsrohr (50) aus einem solchen Material hergestellt ist, dass das Befestigungsrohr (50), wenn es angebracht ist, um die Haltestruktur (37) und die Leitungsdrähte (17) zu enthalten, in der Breitenrichtung (W) durch die Haltestruktur (37) verlängert und in einer Höhenrichtung (H) zusammengedrückt wird, um dadurch die Druckkraft (P1) auf die Leitungsdrähte (17) auszuüben.

5. Der Temperatursensor (1) nach Anspruch 4, wobei
das Befestigungsrohr (50) aus Glaswolle oder einem Metallgewebe oder einem Silikongewebe gebildet ist, die jeweils in einer Rohrform geformt sind.

6. Der Temperatursensor (1) nach einem der Ansprüche 1 bis 5, wobei
der Haltekörper (30) aus einem einzelnen Element aus einem metallischen Werkstoff gebildet ist.

## Revendications

1. Sonde (1) de température comprenant :
un élément (10) de sonde ayant un corps (11) sensible à la chaleur, une paire de fils électriques connectés électriquement au corps (11) sensible à la chaleur, les fils électriques comprenant une paire de fils (15) d'extraction connectés chacun électriquement au corps (11) sensible à la chaleur et une paire de fils (17) d'entrée connectés chacun à l'un respectif des fils (15) d'extraction, et un corps (19) de protection recouvrant le corps (11) sensible à la chaleur, les fils (15) d'extraction et une partie de la paire de fils (17) d'entrée ;
un corps (30) de maintien de l'élément (10) de sonde, le corps (30) de maintien ayant une partie (33) de maintien, pressant et fixant le corps (19) de protection, et une partie (31) de base supportant la paire de fils (17) d'entrée, de manière à mettre à la paire de fils (17) d'entrée en réseau ; et
un conduit (50) de fixation, qui est un élément en un matériau ayant une propriété élastique ou un élément ayant une propriété de se contracter lorsqu'il est chauffé et qui recouvre une périphérie de la paire de fils (17) d'entrée et du corps (30) de retenue, de manière à appliquer une force (P1) pressant chacun des fils (17) d'entrée sur la partie (31) de base, afin de restreindre le déplacement des fils (17) d'entrée par rapport à la partie (31) de base.

2. Sonde (1) de température suivant la revendication 1, dans laquelle
le corps (30) de maintien a une structure (37) de retenue pour une direction linéaire axiale du conduit (50) de fixation.

3. Sonde (1) de température suivant la revendication 2, dans laquelle
la structure (37) de retenue a une saillie (37A, 37B ; 38C ; 38E ; 38F ; 38D) ou un creux (38G) formé sur un ou sur les deux bords (32) des deux côtés de la partie (31) de base dans une direction (W) en largeur dans laquelle la paire de fils (17) d'entrée est mise réseau.

4. Sonde (1) de température suivant la revendication 2 ou 3, dans laquelle
le conduit (50) de fixation est en un matériau tel que le conduit (50) de fixation, lorsqu'il est fixé pour contenir la structure (37) de retenue et les fils (17) d'entrée, est prolongé dans la direction (W) en largeur par la structure (37) de retenue et est aplati dans une direction (H) en hauteur pour appliquer ainsi la force (P1) de pression aux fils (17) d'entrée.

5. Sonde (1) de température suivant la revendication 4, dans laquelle
le conduit (50) de fixation est composé de laine de verre ou d'une toile métallique ou d'une toile de silicone, conformée respectivement en une forme en conduit.

6. Sonde (1) de température suivant l'une quelconque des revendications 1 à 5, dans laquelle
le corps (30) de maintien est constitué d'un élément unique composé d'un matériau métallique.
